Europäisches Patentamt

European Patent Office

Office européen des brevets

(11) Publication number: **0 302 247 B1**

# EUROPEAN PATENT SPECIFICATION

(45) Date of publication of patent specification: **05.02.92**

(21) Application number: **88110803.9**

(22) Date of filing: **06.07.84**

(51) Int. Cl.⁵: **A21B 7/00, A21C 1/14**

(60) Publication number of the earlier application in accordance with Art.76 EPC: **0 131 264**

(54) **Kneading means for bread baking machine.**

(30) Priority: **08.07.83 JP 125251/83**
       **02.12.83 JP 185758/83**

(43) Date of publication of application:
   **08.02.89 Bulletin 89/06**

(45) Publication of the grant of the patent:
   **05.02.92 Bulletin 92/06**

(84) Designated Contracting States:
   **DE FR GB**

(56) References cited:
   **FR-A- 353 203**
   **FR-A- 541 293**
   **US-A- 4 081 862**
   **US-A- 4 367 064**

(73) Proprietor: **HOSIDEN CORPORATION**
   **4-33, Kitakyuhoji 1-chome**
   **Yao-shi Osaka(JP)**

(72) Inventor: **Ojima, Shin**
   **1116-32, Hattorigawa**
   **Yao-shi Osaka(JP)**
   Inventor: **Kamiuchi, Hideaki**
   **1-77-19, Amamihigashi**
   **Matsubara-shi Osaka(JP)**
   Inventor: **Mine, Keiji**
   **4-66, Midorigaoka Yao-sho**
   **Osaka(JP)**

(74) Representative: **Blumbach Weser Bergen**
   **Kramer Zwirner Hoffmann Patentanwälte**
   **Radeckestrasse 43**
   **W-8000 München 60(DE)**

## Description

BACKGROUND OF THE INVENTION

The present invention relates to a bread baking machine for domestic use and, more particularly, to a kneading means for such a bread baking machine.

The bread baking procedure starts with the preparation of dough by kneading the ingredients of bread, i.e. wheat flour, a yeast fungus and small amounts of butter and sugar, with water. The dough is primary-fermented, degassed, secondary-fermented, degassed and fermented for shaping, thereafter being baked. Usually, about three to four hours are needed for baking bread after starting the kneading of the ingredients. Accordingly, for example, if it is desired to complete baking at seven o'clock in the morning, then it is necessary to start kneading of the ingredients of bread at about 3 a.m. With a conventional domestic kneader for kneading the ingredients of bread, since a rotary vane is driven at a considerably high speed of 400-800 rpm, for example, in a container containing the ingredients, the kneading operation produces violent vibrations and loud noises. Accordingly, it is not desirable to operate such a noisy kneader early in the morning. While, there have been proposed kneaders for business use that have low speed rotary vane (e.g. 50-100 rpm); however, if such low rotational speed is employed in domestic kneaders whose containers have a relatively small size, the tangential velocity of the vane would become small, resulting in less production of gluten. Thus, it has been conventional to employ a high rotational speed for domestic kneaders. There has been proposed a kneader having projections on the interior surface of the container for the purpose of increasing the kneading efficiency*. With this type of kneader, however, since the dough is rotated by the rotary vane and hit against the projections to heighten the kneading effect, violent vibrations and loud noises are generated.

The document FR-A-541 293 discloses kneading means comprising a container for receiving the ingredients, a rotary shaft extending along the center line of the container and carrying vanes with two diametrically opposite vanes being connected to the rotary shaft near to the bottom thereof, drive means for driving the rotary shaft from outside the container, and fixed rods connected to the container wall and extending radially to the inside of the container, the fixed rods and the vanes being alternately arranged along the axial direction of the container.

An object of the present invention is to provide an automatic bread baking machine which permits sufficient kneading of the ingredients of bread at a low rotating speed, and hence does not produce violent vibrations and loud noises.

This object is achieved with a kneading means as claimed.

According to the present invention, a container for the ingredients of bread is surrounded by a heater for baking bread, a rotary vane which can be driven from the outside of the container is disposed therein on the bottom thereof, and a fixed rod is provided to extend in the radial direction of the circle of rotation of the rotary vane in adjacent and parallel relation thereto. When kneaded, the dough is twined around the fixed rod and pushed around it by the rotary vane; namely, the dough is sufficiently kneaded by the cooperation of the fixed rod and the rotary vane. In this case, even if the rotary vane is driven at, for example, 150-300 rpm or so, excellent kneading can be achieved.

BRIEF DESCRIPTION OF THE DRAWINGS

Fig.1 is a sectional view illustrating an example of the structure of the kneading means according to the present invention.
Fig.2 is a perspective view showing a rotary vane 19; and
Fig.3 is a schematic diagram showing how dough is kneaded by the rotary vane and a fixed rod.

DESCRIPTION OF THE PREFERRED EMBODIMENTS

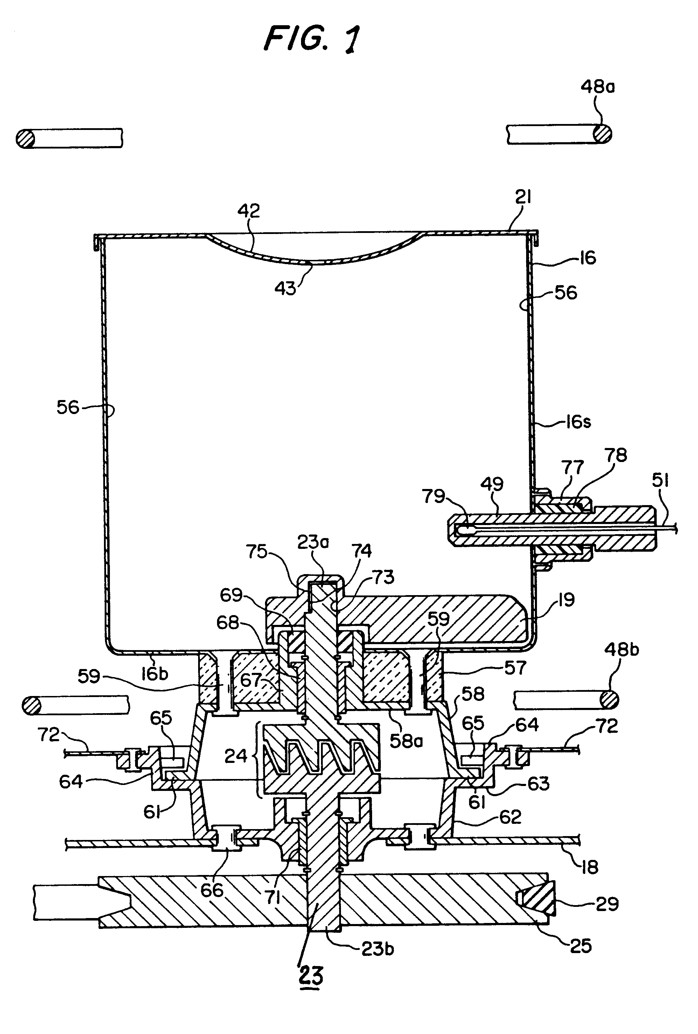

As shown in Fig.1, a rotary vane 19 is rotatably mounted on the bottom of a container 16 and is driven to knead the ingredients of bread in the container 16, obtaining dough. The container 16 is substantially rectangular parallelepipedic in shape and its top opening is covered with a lid 21. A rotary shaft 23 is passed through the bottom panel of the container 16 centrally thereof. The rotary shaft 23 is comprised of an upper shaft 23a which is rotatably supported by the bottom panel of the container 16 and a lower shaft 23b which is rotatably supported by a base plate 18. The upper and lower shafts 23a and 23b are coupled together by a clutch 24. The upper end of the upper shaft 23a carries the rotary vane 19. A pulley 25 is mounted on the lower end of the lower shaft 23b under the base plate 18. A motor (not shown) is mounted on the base plate 18 and its turning force is transmitted via a belt 29 to the pulley 25, driving the rotary vane 19.

A heater 48 is provided for heating the con-

*(JP-A-52-156782)

tainer 16. The heater 48 is comprised of a top heater 48a and a bottom heater 48b. The top heater 48a is a square ring-shaped heater which is held in a housing member (not shown) so that it lies slightly above the lid 21 of the container 16 substantially in parallel thereto. The bottom heater 48b is also a square ring-shaped heater disposed slightly below the bottom panel of the container substantially in parallel thereto. Each side of the heaters 48a and 48b is larger than each side of the top panel of the container 16.

In the container 16 a fixed rod 49 is disposed which extends above the circle of rotation of the rotary vane 19 in the radial direction thereof. In this example, the fixed rod 49 is attached to one of the side panels of the container 16. The fixed rod 49 has incorporated therein a temperature sensor 79 and its lead 51 is led out of the container 16.

Next, a description will be given, with reference to Fig. 1, of the mounting of the container 16 on the base plate 18, the rotary vane 19 and the fixed rod 49 and so forth. The container 16 is made of, for instance, aluminum, and its inner surface is coated with a heatproof film 56 as of tetrafluoroethylene so that baked bread can easily be taken out of the container 16 without adhering to its interior surface. A mount 58 is fixedly secured to the underside of the bottom panel 16b of the container 16 through a heat-insulating layer 57. The heat-insulating layer 57 is made of a material of low thermal conductivity, which prevents the transmission of heat, such as tetrafluoroethylene or silicone rubber. The mount 58 is made by, for example, die-casting of metal into the form of a truncated cone. A top panel 58a of the mount 58, the bottom panel 16b of the container 16 and the heat-insulating layer 57 sandwiched therebetween are staked by means of rivets 59. The mount 58 has an edge flange 61 extending from the periphery of its lower end, and the flange 61 has formed therein a plurality of radial cuts at equiangular intervals, though not shown.

On the other hand, a shallow, bottomed cylindrical cradle 62 made as by die-casting of metal is mounted on the base plate 18. The cradle 62 has an annular flange 63 extending from the periphery of its upper end for receiving the flange 61 of the mount 58 and a ring-shaped limit plate 64 raised about the periphery of the flange 63 for limiting lateral movement of the flange 61 of the mount 58. At least two pins 65 project out inwardly of the limit plate 64 and extend just above or in contact with the flange 61 rested on the annular flange 63, limiting vertical movement of the mount 58. Since the flange 61 has radial cuts as mentioned above, the mount 58 can be disassembled from the cradle 62 by turning the mount 58 to bring its radial cuts into opposing relation to the pins 65. The cradle 62 has its bottom panel staked by rivets 66 to the base plate 18.

The top panel of the mount 58 has a centrally disposed aperture, around which is formed a cylindrical portion 67 extending upwardly of the top panel. The cylindrical portion 67 passes through through holes made in the bottom panel 16b of the container 16 and the heat-insulating layer 57 and slightly extends into the container 16. An oilless bearing 68 is fixedly disposed in the cylindrical portion 67, and the upper shaft 23a of the rotary shaft 23 is inserted through and rotatably held by the oilless bearing 68. A seal 69 as of silicone rubber is closely packed between the upper shaft 23a and the cylindrical portion 67 to prevent water from leaking out from between them. The lower end of the upper shaft 23a has the one half portion of the clutch 24. An oilless bearing 71 is fitted into a central hole made in the bottom panel of the cradle 62, and the lower shaft 23b of the rotary shaft 23 is rotatably held by the bearing 71. The upper end of the lower shaft 23b has the other half portion of the clutch 24. A cover 72 may also be provided, as required near the top surface of the cradle 62 to extend in parallel to the base plate 18.

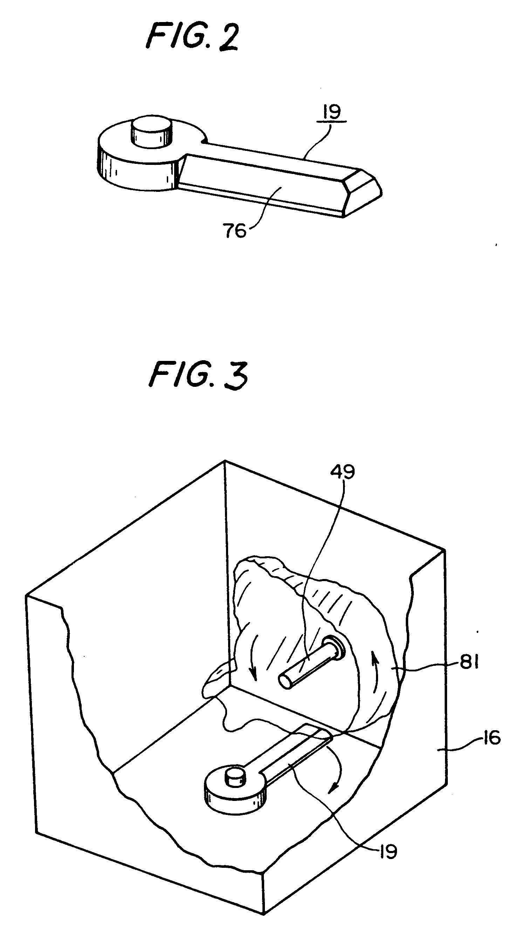

The rotary vane 19 is detachably mounted on the rotary shaft 23 inserted into the container 16. The rotary vane 19 has a coupling hole 73 made in the bottom of its one end portion. The coupling hole 73 is substantially columnar but a portion of its inner peripheral surface is made flat, as indicated by 74. The peripheral surface of the end portion of the rotary shaft 23 is partly cut off to form a coupling face 75. The end portion of the rotary shaft 23 is inserted into the coupling hole 73, with the coupling face 75 of the former held in contact with the flat portion 74 of the latter, by which the rotary vane 19 is mounted on the rotary shaft 23. The rotary vane 19 rotates with the rotation of the rotary shaft 23. By lifting up the rotary vane 19, it can be disassembled from the rotary shaft 23. The rotary vane 19 extends substantially at right angles to the rotary shaft 23 and in adjacent but spaced relation to the bottom panel 16b of the container 16. The length of the rotary vane 19 from the rotary shaft 23 is a little smaller than a half the length of one side of the bottom panel 16b. As shown in Fig. 2, the portion of the rotary vane 19 for receiving the rotary shaft 23 is expanded in a circular form, and as shown in Figs. 1 and 2, a recess is formed in the bottom of the circular portion for receiving the cylindrical portion 67 inserted into the container 16. The face of the rotary vane 19 in the direction of its rotation is inclined, for example, about $60°$ to the bottom thereof, as indicated by 76. It is preferable that the rotary vane 19 be made of, for instance, aluminum, and coated with a film as of tetrafluoroethylene so as to facilitated releasing of bread from the rotary vane 19.

As shown in Fig. 1, a hole is made in the lower portion of one side panel 16s of the container 16 and a tubular holder 77 made of a metallic material is mounted on the outside of the side panel 16s in alignment with the hole. A hold ring 78 of a heatproof resinous material such as tetrafluoroethylene is fixedly mounted on the inner peripheral surface of the holder 77. The fixed rod 49 is inserted into the hold ring 78 from the outside of the side panel 16s and thus detachably mounted on the container 16. The fixed rod 49 is disposed above the circle of rotation of the rotary vane 19 relatively close thereto. The circle of rotation and the fixed rod 49 are spaced apart, for example, about 1.5 cm, in the case of baking a pound of bread. The fixed rod 49 extends in the radial direction of the abovesaid circle of rotation, and the length of the fixed rod 49 extending into the container 16 is approximately 1/4 to 1/6 of one side of the bottom panel 16b of the container 16. The fixed rod 49 may preferably be made of, for instance, aluminum, and coated over the entire area of its outer peripheral surface with a releasing film as of tetrafluoroethylene so as to prevent bread from adhering thereto. The fixed rod 49 has formed therein a thin bore which extends from its outer end face to its inner end. A temperature sensor 79, for example, a negative temperature sensing resistance element, is disposed in the bore at the inner end thereof, and a lead 51 connected to the temperature sensor 79 is led out of the container 16. As the heaters 48a and 48b, nichrome wires are used, for instance.

In this embodiment, the mount 58 is attached to the bottom panel 16b of the container 16 so that the latter can easily be mounted on and dismounted from the housing. The mount 58 is made of metal since it is required to sufficiently withstand high temperatures during baking and severe mechanical shocks during kneading. Accordingly, during baking heat of the bottom panel 16b of the container 16 is absorbed and radiated by the mount 58 and the heat is further transmitted to the cradle 62 and the base plate 18. This introduces the possibility of insufficient baking in the vicinity of the bottom panel 16b of the container 16. With the provision of the heat-insulating layer 57 between the bottom panel 16b and the mount 58 as shown in Fig. 1, however, it is possible to sufficiently bake bread uniformly throughout it.

In the past, the opening of the container containing dough has been covered with a wet cloth to prevent the surface of the dough from getting dry during its fermentation. But, for full automatic operations from the kneading step to the baking one, it is very difficult to automatically cover the opening of the container with such a wet cloth. In the embodiment illustrated in Fig. 1, however, the container 16 is permitted to communicate with the outside only through a small hole 43 made in its lid 21, and hence it is held in a substantially sealed condition. Therefore, the steam generated from the dough 81 in the kneading and baking processes fills the container to prevent the surface of the dough 81 from drying. Moreover, since a small amount of excessive steam is gradually released through the small hole 43 together with the fermentation gas, this embodiment is free from such a fear that steam generated from the dough 81 condenses on the inside of the lid 21 into dewdrops which drip down therefrom onto the dough 81, thus ensuring to obtain excellent baking of bread. The small hole 43 may be 2 to 4 mm in diameter in the case of using a container 16 of the size for baking a pound of bread.

After pouring the ingredients of bread and water into the container 16, the pulley 29 is driven by the rotation of the motor, and the rotation of the lower shaft 23b is transmitted via the clutch 24 to the upper shaft 23a, driving the rotary vane 19. By the rotation of the rotary vane 19, the ingredients of bread are kneaded into dough, which is twined around the fixed rod 49. As shown in Fig. 3, the dough 81 twisted around the fixed rod 49 is pushed by the rotary vane 19 to turn about the rod 49 and kneaded by the cooperation of the rotary vane 19 and the fixed rod 49. In this way, the dough 81 is kneaded while turning about the fixed rod 49, and hence it does not turn around in the container 16 nor is it hit against the side wall of the container 16. Accordingly, the center of gravity of the dough hardly shifts and severe vibrations or loud noises are not produced. In the past, the rotary vane 19 had to be driven at a high speed of 400-800 rpm, but according to this embodiment, excellent dough can be obtained by driving the rotary vane 19 at a low speed of about 150-300 rpm, permitting sufficient reduction of vibrations and noises.

In the kneading step, the fixed rod 49 is subjected only to the force of the rotary vane 19 which tends to push it up through the dough 81, so that it is possible to eliminate the possibility of the fixed rod 49 coming off the side panel 16s of the container 16 by applying a simple stopper, though not shown, after insertion of the rod 49 into the holder 77. When baked bread is to be taken out of the container 16, the fixed rod 49 can easily be drawn out of the container 16. That is, the fixed rod 49 can be mounted and dismounted very easily. The length of the fixed rod 49 may be relatively small, as mentioned previously; for example, in the case of a container 16 for baking a pound of bread, the length of the rod 49 extending into the container 16 may be about 2.5 cm and its diameter may be 1 cm or so. A small hole of such a size in baked bread would not spoil its appearance. Further, the fixed rod 49 is so small that by rotating the rotary vane 19 in the fermentation step, the dough 81 swollen by fermentation can be degassed and dropped off the rod 49 easily.

In the embodiment of Fig. 1, the rotary vane 19 can easily be lifted off from the rotary shaft 23 and can be mounted thereon with ease. During kneading the rotary vane 19 presses the dough 81 against the fixed rod 49 and, by the resulting reaction, it is pushed down, so that there is no possibility of the rotary vane 19 coming off from the rotary shaft 23. The bottom of baked bread is depressed to conform with the rotary vane 19, but the depression is only 8 cm long and about 1.5 cm deep and wide.

As the dough 81 is kneaded, its temperature rises. By completing the kneading step when the dough temperature has reached 27 to 28°C, excellent bread can be obtained and, in addition, subsequent control, for example, time control in the fermentation step is simplified. In the embodiment of Fig. 1, the dough temperature can be detected with an appreciably high degree of accuracy by detecting the temperature at the inner end of the fixed rod 49 with the temperature sensor 79.

## Claims

1. Kneading means for a bread baking machine, comprising:

    a container (16) for receiving ingredients of bread;

    a rotary vane (19) disposed in said container on the bottom thereof;

    drive means (23a, 23b, 24, 25, 29) for driving said rotary vane from the outside of said container; and

    a single fixed rod (49) removably inserted in to said container through a hole in its side panel (16s) so as to extend towards the axis of the rotary shaft, and at a certain vertical distance above the upper surface of the rotary vane.

2. The kneading means of claim 1, wherein the rotary vane (19) extends to the vicinity of the interior surface of said side panel (16s) of said container (16) and the length of the fixed rod (49) extending above the circle of rotation of said rotary vane (19) in the radial direction thereof is smaller than half the length of the rotary vane.

3. The kneading means of claim 1, wherein said fixed rod (49) is disposed about 1.5 cm above the circle of rotation of said rotary vane (19).

4. The kneading means of claim 1, 2 or 3, wherein said rotary vane (19) is driven by said drive means (23a, 23b, 24, 25, 29) at a speed of 150 to 300 rpm.

## Revendications

1. Moyen de pétrissage pour dispositif de cuisson de pain, comprenant :

    un récipient (16) pour recevoir les ingrédients du pain;

    une pale rotative (19) disposée dans ledit récipient sur le fond de celui-ci;

    un moyen d'entraînement (23a, 23b, 24, 25, 29) pour entraîner ladite pale rotative depuis l'extérieur dudit récipient; et

    une seule tige fixe (49) insérée de manière amovible dans ledit récipient par un orifice dans le panneau latéral (16s) de celui-ci de manière à s'étendre vers l'axe de l'arbre rotatif, et à une certaine distance verticale au-dessus de la surface supérieure de la pale rotative.

2. Moyen de pétrissage selon la revendication 1, dans lequel la pale rotative (19) s'étend jusqu'au voisinage de la surface interne dudit panneau latéral (16s) dudit récipient (16) et la longueur de la tige fixe (49) s'étendant au-dessus du cercle de rotation de ladite pale rotative (19) dans sa direction radiale est inférieure à la moitié de la longueur de la pale rotative.

3. Moyen de pétrissage selon la revendication 1, dans lequel ladite tige fixe (49) est disposée à 1,5 cm environ au-dessus du cercle de rotation de ladite pale rotative (19).

4. Moyen de pétrissage selon la revendication 1, 2 ou 3, dans lequel ladite pale rotative (19) est entraînée par ledit moyen d'entraînement (23a, 23b, 24, 25, 29) à une vitesse de 150 à 300 tr/min.

## Patentansprüche

1. Knetvorrichtung für eine Brotbackmaschine, umfassend:

    einen Behälter (16) zur Aufnahme der Zutaten für das Brot,

    einen Drehflügel (19), der in dem Behälter an dessen Boden angeordnet ist,

    eine Antriebseinrichtung (23a, 23b, 24, 25, 29) zum Antrieb des Drehflügels von außerhalb des Behälters, und

    eine einzige feste Stange (49), die durch ein Loch in der Seitenwand (16s) des Behälters entfernbar in diesen eingesetzt ist, so daß sie sich in Richtung auf die Achse der Drehwelle erstreckt und in einem gewissen vertikalen Abstand über der Oberseite des Drehflügels liegt.

2. Knetvorrichtung nach Anspruch 1, bei der sich der Drehflügel (19) in die Nähe der Innenfläche der Seitenwand (16s) des Behälters (16) erstreckt und die Länge der festen Stange (49), die sich über dem Drehkreis des Drehflügels (19) in dessen radialer Richtung erstreckt, kleiner ist als die halbe Länge des Drehflügels.

3. Knetvorrichtung nach Anspruch 1, bei der die feste Stange (49) etwa 1,5 cm über dem Drehkreis des Drehflügels (19) angeordnet ist.

4. Knetvorrichtung nach Anspruch 1, 2 oder 3, bei der Drehflügel (19) von der Antriebseinrichtung (23a, 23b, 24, 25, 29) mit einer Drehzahl von 150 bis 300 Upm angetrieben wird.

# FIG. 1

## FIG. 2

## FIG. 3